# EUROPÄISCHE PATENTSCHRIFT

(11) **EP 0 467 167 B1**
(45) Veröffentlichungstag und Bekanntmachung des Hinweises auf die Patenterteilung: **23.08.1995**
(21) Anmeldenummer: 91111172.2
(22) Anmeldetag: 05.07.1991
(51) Int. Cl.: C08F 8/14

(54) **Neue Carbonate, ihre Herstellung und Verwendung als Fliesshilfsmittel**
Carbonates, their manufacture and use as dispersing agents
Carbonates, leur préparation et leur utilisation comme agents dispersants

(30) Priorität: 18.07.1990 DE 4022752
(43) Veröffentlichungstag der Anmeldung: 22.01.1992
(73) Patentinhaber: BAYER AG, 51368 Leverkusen (DE)
(72) Erfinder: Fennhoff, Gerhard, Dr., W-4156 Willich 2 (DE); Westeppe, Uwe, Dr., W-4020 Mettmann (DE); Nouvertné, Werner, Dr., W-4150 Krefeld 11 (DE); Idel, Karsten-Josef, Dr., W-4150 Krefeld 11 (DE); Leitz, Edgar, Dr., W-4047 Dormagen (DE); Grigo, Ulrich, Dr., W-4152 Kempen 3 (DE)

(56) Entgegenhaltungen:
- EP-A- 0 312 872
- EP-A- 0 348 744
- EP-A- 0 359 953
- EP-A- 0 402 729

## Beschreibung

Gegenstand der vorliegenden Erfindung sind neue Carbonate der Formel (I) 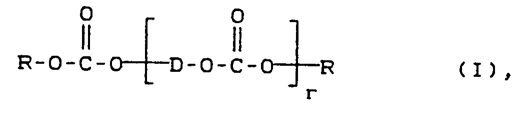
worin
R ein aromatisch angebundener Polystyrolrest ist und
-O-D-O- ein Diphenolatrest ist, worin -D- ein zweibindiger Rest mit 6 bis 30 C-Atomen ist, und
r Null ist, und wobei aromatisch angebundene Polystyrolreste R solche sind, die von Monohydroxyphenylpolystyrolen ROH abgeleitet sind, und mittlere Zahlenmittelmolekulargewichte M̅n (M̅n ermittelt durch Gelpermeationschromatographie nach vorheriger Styrol-Eichung) von 1000 bis 50 000, vorzugsweise von 2000 bis 35 000 und insbesondere von 2 500 bis 10 000 haben.

Die Herstellung derartiger Monohydroxyphenylpolystyrole erfolgt beispielsweise in bekannter Weise durch anionische Polymerisation von Styrol und/oder p-Methylstyrol anschließende Umsetzung des monofunktionellen Polymeranions mit einer Hydroxyphenylvinylverbindung, beispielsweise mit Isopropenylphenol, deren Hydroxygruppe in bekannter Weise maskiert ist, beispielsweise durch die Trimethylsilylgruppe. Diese wird abschließend abgespalten.

Bevorzugte Monohydroxyphenylpolystyrole ROH sind solche der Formel (IIa) 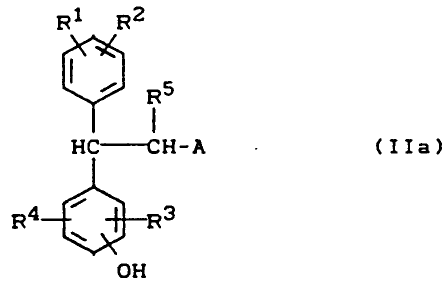
worin
- A: ein Polymerisat von Styrol und/oder p-Methylstyrol mit einem M̅n bevorzugt von 2000 bis 35 000, besonders bevorzugt von 2500 bis 10 000,
- R¹ und R²: H, C₁-C₄-Alkyl oder CH₂-O-,
- R³: H oder C₁-C₄-Alkyl, O-C₁-C₄-Alkyl,
- R⁴: H, C₁-C₄-Alkyl und
- R⁵: H oder C₁-C₄-Alkyl bedeuten.

Diese bevorzugten Monohydroxyphenylpolystyrole der Formel (IIa) und ihre Herstellung sind literaturbekannt (siehe beispielsweise Makromol Chem. 190, Seiten 487 bis 493 (1989), EP-OS 0 348 744 und DE-OS 38 21 745.

Bevorzugte Carbonate der Formel (I) sind somit solche, in denen R ein Rest der Formel 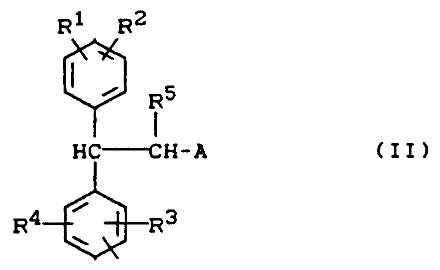
ist, worin
A, R¹, R², R³, R⁴ und R⁵ die für Formel (IIa) genannte Bedeutung haben.

Die Herstellung der Verbindungen der Formel (I) erfolgt in bekannter Weise durch Umsetzung von Phosgen mit den Monohydroxyphenylpolystyrolen ROH nach den für die Polycarbonat-Synthese üblichen Methoden (siehe beispielsweise "H.Schnell, Chemistry and Physics of Polycarbonates, Interscience Publishers, New York, 1964"), vorzugsweise nach dem Phasengrenzflächenverfahren, wobei ein Überschuß an Phosgen, bezogen auf die eingesetzte Menge an Monohydroxyphenylpolystyrol, einzusetzen ist, wobei bevorzugt ein Molverhältnis Phosgen zu Monohydroxyphenylpolystyrol von 4:1 einzusetzen ist.

Gegenstand der vorliegenden Erfindung ist somit auch ein Verfahren zur Herstellung der Carbonate der Formel (I), das dadurch gekennzeichnet ist, daß man Monohydroxyphenylpolystyrole ROH, vorzugsweise solche der Formel (IIa), nach dem Phasengrenzflächenverfahren mit Phosgen umsetzt, wobei ein Überschuß an Phosgen, bezogen auf die eingesetzte Menge an Monohydroxyphenylpolystyrol, einzusetzen ist, welcher vorzugsweise ein Molverhältnis Phosgen:Monohydroxyphenylpolystyrol von 4:1 ist.

Beispiele für Monohydroxyphenylpolystyrole ROH bzw. der Formel (IIa) sind Styrol- und 4-Methylstyrolpolymerisate mit Mn von 1.000 bis 50.000, vorzugsweise von 2.000 bis 35.000 und insbesondere 2.500 bis 10.000, wobei M̅n das mittlere Zahlenmittelmolekulargewicht ist, das druch Gelpermeationschromatographie nach vorheriger Styrol-Eichung ermittelt wird.

Die erfindungsgemäßen Carbonate sind geeignet als Fließhilfsmittel für Thermoplasten, insbesondere für
1. thermoplastische, aromatische Polycarbonate,
2. thermoplastische, aromatische Polyester,
3. thermoplastische, aromatische Polyestercarbonate,
4. thermoplastische Polyamide,
5. thermoplastische Polyalkylenglykolterephthalate,
6. thermoplastische Polyarylensulfone,
7. thermoplastische aromatische Polyetherketone,
8. thermoplastische Polyarylensulfide und
9. thermoplastische Polyphenylenoxide.

Geeignet sind auch Mischungen der vorstehend genannten Thermoplasten unter sich sowie der vorstehend genannten Thermoplasten mit anderen thermoplastischen Kunststoffen, beispielsweise von thermoplastischen Polycarbonaten mit
10. Styrolpolymerisaten oder mit
11. ABS, also mit Pfropfpolymerisaten von Styrol und Acrylnitril auf Polybutadien.

Derartige Mischungen von Thermoplasten sind literaturbekannt.

Gegenstand der vorliegenden Erfindung ist somit auch die Verwendung der erfindungsgemäßen Carbonate der Formel (I) als Fließhilfsmittel in Thermoplasten.

Die Menge an Carbonat der Formel (I) beträgt hierbei zwischen 0,01 Gew.-% und 30 Gew.-%, vorzugsweise zwischen 0,5 Gew.-% und 20 Gew.-% und insbesondere zwischen 1,0 Gew.-% und 5,0 Gew.-%, bezogen jeweils auf Gesamtgewicht aus Thermoplast und Carbonat der Formel (I).

Gegenstand der vorliegenden Erfindung sind somit auch Mischungen enthaltend
(A) Thermoplasten in Mengen von 99,99 Gew.-% bis 70 Gew.-%, vorzugsweise von 99,5 Gew.-% bis 80 Gew.-% und insbesondere von 99 Gew.-% bis 95 Gew.-% und
(B) Carbonate der Formel (I) in Mengen von 0,01 Gew.-% bis 30 Gew.-%, vorzugsweise von 0,5 Gew.-% bis 20 Gew.-% und insbesondere von 1 Gew.-% bis 5,0 Gew.-%, bezogen jeweils auf 100 Gew.-% der Summe aus (A) Thermoplast (B) Carbonat (I).

Thermoplasten im Sinne vorliegender Erfindung sind definitionsgemäß Kunststoffe, die beim Erwärmen vom festen Zustand in den elastischen Zustand und schließlich in die Schmelze übergehen. Sie sind also durch Erwärmen und Wiederabkühlen reversibel formbar. Sie können amorph oder auch teilweise kristallin sein.

Der thermoplastisch verarbeitbare Molekulargewichtsbereich, also der Bereich zwischen zu niedrigem Molekulargewicht und deshalb spröder Kunststoffkonsistenz und zu hohem Molekulargewicht und deshalb nicht mehr erweichungsfähiger Konsistenz, hängt von dem jeweiligen stofflichen Aufbau der Kunststoffe ab und ist dem Fachmann geläufig.
1. Thermoplastische aromatische Polycarbonate im Sinne der vOrliegenden Erfindung sind die durch Umsetzung von Diphenolen, insbesondere von Dihydroxydiarylalkanen, mit Phosgen oder Diestern der Kohlensäure erhältlichen Polykondensate, wobei außer den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet. Als Kettenabbrecher dienen beispielsweise Monophenole. Als Verzweiger beispielsweise Trisphenole oder Tetraphenole.
   Die Polycarbonate haben mittlere Gewichtsmittelmolekulargewichte M̅w zwischen 15 000 und 200 000, vorzugsweise zwischen 20 000 bis 80 000, ermittelt durch Gelpermeationschromatographie oder durch Messungen der rel. Viskosität in CH₂Cl₂ bei 25°C und einer Konzentration von 0,5 g pro 100 ml.
   Geeignete Diphenole sind z.B. Hydrochinon, Resorcin, 4,4'-Dihydroxydiphenyl, Bis-(hydroxy-phenyl)-alkane wie beispielsweise C₁-C₈-Alkylen-bzw. C₂-C₈-Alkylidenbisphenole, Bis-(hydroxyphenyl)-cycloalkane wie beispielsweise C₅-C₁₅-Cycloalkylen- bzw. C₅-C₁₅-Cycloalkylidenbisphenole, Bis-(hydroxyphenyl)-sulfide, -ether, -ketone, -sulfoxide oder -sulfone. Ferner α,α'-Bis-(hydroxyphenyl)-diisopropylbenzol sowie die entsprechenden kernalkylierten bzw. kernhalogenierten Verbindungen.
   Bevorzugt sind Polycarbonate auf Basis Bis-(4-hydroxyphenyl)-propan-2,2 (Bisphenol A), Bis-(4-hydroxy-3,5-dichlor-phenyl)-propan-2,2 (Tetrachlorbisphenol A), Bis-(4-hdyroxy-3,5-dibromphenyl)-propan-2,2 (Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z), 1,1-Bis-(4-hydroxyphenyl)-3,3,5-trimethylcyclohexan sowie auf Basis von Dreikernbisphenolen wie α,α'-Bis-(4-hydroxyphenyl)-p-diisopropylbenzol. Weitere geeignete Diphenole sowie Herstellung der Polycarbonate sind beispielsweise in den US-Patenten 3 028 365, 3 062 781 und 3 879 347 sowie in der deutschen Offenlegungsschrift 38 32 396 beschrieben.
   Verzweigte Polycarbonte sind beispielsweise im US-Patent 4 185 009 bzw. im deutschen Patent 2 500 092 beschrieben.
2. Thermoplastische, aromatische Polyester im Sinne vorliegender Erfindung sind solche auf Basis von Diphenolen, aromatischen Dicarbonsäuredichloriden, Kettenabbrechern und gegebenenfalls Verzweigungsmitteln.
   Als Diphenole dienen die für die Polycarbonatherstellung vorstehend genannten Verbindungen.
   Als Kettenabbrecher dienen Monophenole, als Verzweiger dienen Trisphenole und Tetraphenole.
   Darüberhinaus können als Verzweigungsmittel hier bevorzugt auch aromatische Tricarbonsäuretrichloride oder aromatische Tetracarbonsäuretetrachloride oder Säurechloride von noch höherwertigeren aromatischen Carbonsäuren eingesetzt werden.
   Sie werden in Mengen von 0,01 bis 1 Mol-%, bezogen auf eingesetzte aromatische Dicarbonsäuredichloride, eingesetzt, während bei Einsatz von phenolischen Verzweigern deren Menge von 0,01 bis 1 Mol-% sich auf eingesetzte Diphenole zur Herstellung des aromatischen Polyesters bezieht.
   Verzweigungsmittel zur Herstellung aromatischer Polyester sind beispielsweise in der DE-OS 2 940 024, Seiten 9/10 (Le A 19 932) beschrieben.
   Geeignete aromatische Dicarbonsäuredichloride sind:
   Terephthalsäuredichlorid, Isophthalsäuredichlorid, o-Phthalsäuredichlorid, Diphenyl-dicarbonsäure-dichlorid, Diphenylether-dicarbonsäure-dichlorid, Naphthalindicarbonsäure-dichlorid und deren Gemische.
   Bevorzugte Gemische sind solche von Terephthalsäuredichloriden mit Isophthalsäuredichloriden im Verhaltnis 20:1 bis 1:20, insbesondere von 7:3 bis 3:7.
   Die Herstellung der aromatischen Polyester aus Säurechloriden, Diphenolen, Kettenabbrechern und gegebenenfalls Verzweigern erfolgt vorzugsweise nach dem Verfahren der Phasengrenzfäachenpolykon-densation in bekannter weise. (Siehe dazu beispielsweise wiederum die DE-OS 2 940 024 sowie deutsche Patentanmeldung P 39 03 103.9.
3. Thermoplastische aromatische Polyestercarbonate im Sinne vorliegender Erfindung sind solche erhältlich in bekannter Weise aus Diphenolen, Phosgen, aromatischen Dicarbonsäuredichloriden, Kettenabbrechern und gegebenenfalls Verzweigern.
   Polyestercarbonate sowie ihre Herstellung sind bekannt, (Siehe beispielsweise E-OS 0 036 080, US-PS 3 169 121, DE-OS 2 714 544 und deutsche Patentanmeldung P 39 03 103.9).
   Geeignete Diphenole sind die für die Polycarbonatherstellung bereits genannten.
   Geeignete aromatische Dicarbonsäuredichloride sind die für aromatische Polyesterherstellung bereits genannten, wobei wiederum Gemische von Terephthalsäuredichloriden mit Isophthalsäuredichloriden in den bereits erwähnten Mischungsverhältnissen besonders geeignet sind.
   Geeignete Kettenabbrecher sind Monophenole, wie sie auch für die Polycarbonat- und Polyester-Herstellung geeignet sind.
   Geeignete Verzweiger sind die vorstehend für die aromatischen Polyester genannten mehr als zweiwertigen Phenole und mehr als zweiwertigen aromatischen Carbonsäurechloride.
   Die aromatischen Polyestercarbonate im Sinne der vorliegenden Erfindung haben bis etwa 80 Mol-%, vorzugsweise bis etwa 50 Mol-% Carbonatgruppen, bezogen auf die Molsumme an Carbonatgruppen und aromatischen Carbonsäureestergruppen.
   Sowohl der Ester- als auch der Carbonatanteil der erfindungsgemäßen aromatischen Polyestercarbonate kann in Form von Blöcken oder statistisch verteilt im Polykondensat vorliegen.
   Die relative Lösungsviskosität (ηrel) der aromatischen Polyester und Polyestercarbonate liegt im Bereich 1,18 bis 1,4 vorzugsweise 1,22 bis 1,3 (gemessen an Lösungen von 0,5 g Polyestercarbonat in 100 ml CH₂Cl₂-Lösung bei 25°C).
4. Gemäß vorliegender Erfindung geeignete thermoplastische Polyamide sind beispielsweise Nylon-6,6, das durch Kondensation von Hexamethylendiamin und Adipinsäure hergestellt wurde; Nylon-6,10, hergestellt aus Hexamethylendiamin und Sebacinsäure, Polymere der ε-Aminocapronsäure oder des ε-Caprolactams, sogenanntes Nylon-6; Polyamid 11, das Eigenkondensationsprodukt der 11-Aminoundecansäure; Mischpolymerisate aus Hexamethylendiamin, ε-Caprolactam, Adipinsäure und Sebacinsäure: Mischpolymerisate aus Hexamethylendiamin und Adipinsäure, modifiziert mit Formaldehyd und Methanol; Polyamide, die durch Umsetzung eines linearen Diamins mit dimeren Säuren, welche aus Isobutylendimeren erhalten worden sind, hergestellt wurden, sowie Polyamide, die aus polymeren ungesättigten Fettsauren und verschiedenen Polyaminen hergestellt wurden.
   Alle erfindungsgemäß geeigneten Polyamide sollen 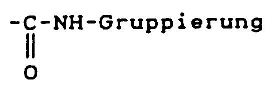 als Brückenglied in der Hauptkette enthalten und mittlere Molekulargewichte (M̅w, wird gelchromatographisch im m-Kresol bestimmt) zwischen 1000 und 100 000 haben (Literatur siehe z.B. US-Patent 3 431 224, Spalte 3, Zeilen 58 bis 73).
   Die erfindungsgemäß geeigneten, thermoplastischen Polyamide sind somit literaturbekannt oder nach literaturbekannten Verfahren erhältlich.
5. Thermoplastische Polyalkylenglykolterephthalate im Sinne der vorliegenden Erfindung sind z.B. solche auf Basis von Ethylenglykol, Propandiol-1,3, Butandiol-1,4, Hexandiol-1,6 und 1,4-Bis-hydroxymethylcyclohexan. Die Molekulargewichte (M̅W) dieser Polyalkylenglykolterephthalate liegen zwischen 10 000 und 80 000. Die Polyalkylenglykolterephthalate können nach bekannten Verfahren beispielsweise aus Terephthalsäuredialkylester und dem entsprechenden Diol durch Umesterung erhalten werden (siehe z.B. US-Patente 2 647 885, 2 643 989, 2 534 028, 2 578 660, 2 742 494, 2 901 466).
   Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140°C auf 210 bis 220°C erhöht. Der in Freiheit gesetzte Alkohol wird abdestilliert. Die Aufkondensation erfolgt anschließend bei Temperaturen von 210 bis 280°C, der Druck wird dabei stufenweise bis auf weniger als 1 Torr erniedrigt, wobei das überschüssige Diol abdestilliert wird.
   Die erfindungsgemäß geeigneten, thermoplastischen Polyalkylenglykolterephthalate sind somit literaturbekannt oder nach literaturbekannten Verfahren erhältlich.
6. Geeignete Polyarylensulfone im Sinne der Erfindung haben mittlere Gewichtsmittelmolekulargewichte M̅w (gemessen nach der Lichtstreumethode in CHCl₃) zwischen 1000 und 200 000, vorzugsweise zwischen 20 000 und 60 000. Beispiele dafür sind die nach bekannten Verfahren erhältlichen Polyarylensulfone aus 4,4'-Dichlordiphenylsulfon und einem Bisphenol, insbesondere 2,2-Bis-(4-hydroxyphenyl)-propan, mit mittleren Gewichtsmittelmolekulargewichten (M̅w) von 2000 bis 200 000.
   Diese Polyarylensulfone sind bekannt (siehe beispielsweise US-PS 3 264 536, DE-AS 1 794 171, GB-PS 1 264 900, US-PS 3 641 207, EP-A-00 38 028, DE-OS 3 601 419 und DE-OS 3 601 420). Die geeigneten Polyarylensulfone können auch in bekannter Weise verzweigt sein (siehe beispielsweise DE-OS 2 305 413).
7. Gemäß vorliegender Erfindung geeignete thermoplastische Polyetherketone sind literaturbekannt (siehe beispielsweise GB-PS 1 078 234, US-PS 4 010 147 und EP-OS 0 135 938).
   Sie enthalten das wiederkehrende Strukturelement

   -O-H-O-H'-

   worin -H' - der zweibindige Rest eines Bisarylketons und -O-H-O- ein zweibindiger Diphenolat-Rest ist.
   Sie können beispielsweise gemäß GB-PS 1 078 234 aus Dialkalidiphenolaten der Formel Alkali-O-H-O-Alkali und Bis-(halogenaryl)-ketonen der Formel Hal-H'-Hal (mit Hal = Halogen) hergestellt werden. Ein geeignetes Dialkalidiphenolat ist z.B. das des 2,2-Bis-(4-hydroxyphenyl)-propan, ein geeignetes Bis-(halogenaryl)-keton ist das des 4,4'-Dichlorbenzophenon.
8. Erfindungsgemäß geeignete thermoplastische Polyarylensulfide können lineare oder verzweigte Polyarylensulfide sein. Sie haben Struktureinheiten der allgemeinen Formel 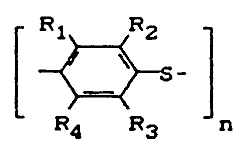 wobei R₁ bis R₄ unabhängig oder gleich sein können und C₁-C₆-Alkyl, Phenyl oder Wasserstoff sind. Weiterhin können die Polyarylensulfide auch Diphenyl-Einheiten enthalten.
   Polyarylensulfide und ihre Herstellung sind bekannt (siehe beispielsweise US-PS 33 54 129 und EP-OS 0 171 021 sowie die in der EP-OS 0 171 021 zugezogene Literatur).
9. Erfindungsgemäß geeignete thermoplastische Polyphenylenoxide sind vorzugsweise Poly-(2,6-dialkyl-1,4-phenylenoxide). Erfindungsgemäß geeignete Polyphenylenoxide haben Gewichtsmittelmolekulargewichte Mw (gemessen nach der Lichtstreumethode in Chloroform) zwischen 2000 und 100 000, vorzugsweise zwischen 20 000 und 60 000. Diese Polyphenylenoxide sind bekannt.
   Die bevorzugten Poly-(2,6-di-alkyl-1,4-phenylenoxide) können nach bekannten Verfahren durch oxydierende Kondensation von 2,6-Dialkylphenolen mit Sauerstoff in Anwesenheit von Katalysatorkombinationen aus Kupfersalzen und tertiären Aminen erhalten werden (siehe beispielsweise DE-OS 2 126 434 und US-PS 3 306 875).
   Geeignete Poly-(2,6-dialkyl-1,4-phenylenoxide) sind insbesondere die Poly-[2,6-di(C₁-C₄-alkyl)-1,4-phenylenoxide] wie beispielsweise Poly-(2,6-dimethyl-1,4-phenylenoxid).
10. Erfindungsgemäß geeignete Styrolpolymerisate sind vorzugsweise thermoplastische Copolymerisate von Styrol und/oder α-Methylstyrol mit Acrylnitril und/oder mit Methacrylnitril, wobei im allgemeinen 50 bis 95 Gew.-Teile Styrol und/oder α-Methylstyrol und 50 bis 5 Gew.-Teile Acrylnitril und/oder Methacrylnitril, bezogen jeweils auf 100 Gew.-Teile Copolymerisat, in den thermoplastischen Copolymerisaten einpolymerisiert sind.
   Bevorzugte Gewichtsverhältnisse im Copolymerisat sind 60 bis 80 Gew.-Teile Styrol und/oder α-Methylstyrol zu 40 bis 20 Gew.-Teilen Acrylnitril und/oder Methacrylnitril.
   Derartige thermoplastische Copolymerisate sind bekannt und lassen sich durch radikalische Polymerisation, insbesondere durch Emulsions-, Suspensions-, Lösungs- oder Massepolymerisation herstellen. Die Copolymerisate besitzen vorzugsweise Molekulargewichte M̅W (Gewichtsmittel, ermittelt durch Lichtstreuung oder Sedimentation) zwischen 15 000 und 200 000. Die Styrolpolymerisate sind bekannt.
11. Erfindungsgemäß geeignete ABS-Pfropfpolymerisate sind im weitesten Sinne Pfropfpolymere der -vorstehend unter 10 subsummierten Vinylmonomeren auf Butadienkautschuke.

Die Einarbeitung der erfindungsgemäßen Carbonate der Formel (I) in die Thermoplasten kann erfolgen durch Vermischen der Mischungspartner in der Schmelze in Mischern oder Knetern und anschließendes Abkühlen und Granulieren der Schmelze, oder durch Extrusion der Schmelze der Mischungspartner unter Einwirkung hoher Scherkräfte und anschließende Granulierung.

In speziellen Fällen, beispielsweise bei der Einarbeitung in Polycarbonate oder Polyestercarbonate kann die Mischung auch über die Lösungen der Mischungspartner im geeigneten Lösungsmitteln, wie vorzugsweise CH₂Cl₂, Chlorbenzol oder deren Mischungen erfolgen, wobei die Lösungsgemische anschließend in bekannter Weise eingedampft werden.

Gegenstand der vorliegenden Erfindung ist somit auch ein Verfahren zur Herstellung der erfindungsgemäßen Mischungen aus
(A) den Thermoplasten und
(B) den Carbonaten der Formel (I),
das dadurch gekennzeichnet ist, daß man die jeweiligen Komponenten (A) und (B) in der Schmelze in Mischern oder Knetern mischt und anschließend abkühlt und granuliert, oder daß man die Komponenten (A) und (B) unter Einwirkung hoher Scherkräfte extrudiert und anschließend granuliert, oder daß man die Komponenten (A) und (B) in geeigneten Lösungsmitteln löst und die Lösungsgemische anschließend in bekannter Weise eindampft.

Das Eindampfen der Lösungsgemische kann beispielsweise in Ausdampfextrudern, Sprühverdampfern oder Dünnschichtverdampfern erfolgen.

Den erfindungsgemäßen Mischungen aus den Thermoplasten und den Carbonaten der Formel (I) können noch andere, geeignete Additive simultan mit dem Carbonat-Zusatz oder davor oder danach eingearbeitet werden, wobei als geeignete Additive solche verstanden sind, die für die jeweiligen Thermoplasten üblich sind, also dem Fachmann geläufig sind.

Geeignete Additive sind beispielsweise Stabilisatoren, Flammschutzmittel, Entformungsmittel, Antistatika, Pigmente und UV-Absorber.

Gegenstand der vorliegenden Erfindung sind somit auch Mischungen enthaltend
(A) Thermoplasten in Mengen von 99,99 Gew.-% bis 70 Gew.-%, vorzugsweise von 99,5 Gew.-% bis 80 Gew.-% und insbesondere 99 Gew.-% bis 95 Gew.-% und
(B) Carbonate der Formel (I) in Mengen von 0,01 Gew.-% bis 30 Gew.-%, vorzugsweise von 0,5 Gew.-% bis 20 Gew.-% und insbesondere von 1 Gew.-% bis 5 Gew.-%, bezogen jeweils auf 100 Gew.-% der Summe aus (A) + (B),
und mindestens
(C) ein Additiv, ausgewählt aus Stabilisatoren, Flammschutzmitteln, Entformungsmitteln, Antistatika, Pigmenten und UV-Absorbern.

Gegenstand der vorliegenden Erfindung ist auch ein Verfahren zur Herstellung der erfindungsgemäßen Mischungen aus (A) den Thermoplasten, (B) den Carbonaten der Formel (I) und (C) mindestens einem Additiv, ausgewählt aus Stabilisatoren, Flammschutzmitteln, Entformungsmitteln, Antistatika, Pigmenten und UV-Absorbern, das dadurch gekennzeichnet ist, daß man die Thermoplasten (A) in der Schmelze bei Temperaturen von 260°C bis 360°C zusammen mit den Carbonaten der Formel (I) gemäß (B) und mindestens einem Additiv gemäß (C) vermischt und extrudiert.

Die erfindungsgemäßen Mischungen aus (A) Thermoplasten, (B) Carbonaten der Formel (I) und (C) gegebenenfalls den anderen, geeigneten Additiven können in bekannter Weise zu Formteilen der verschiedensten Art verarbeitet werden, beispielsweise zu Platten oder Spritzgußartikeln.

Dies kann auf den üblichen Maschinen, wie Extrudern oder Spritzgußmaschinen, erfolgen.

Die Formteile sind beispielsweise einsetzbar, wenn die jeweiligen Thermoplasten zu komplizierten oder dünnwandigen Formkörpern verformt werden müssen, also ein gutes Fließverhalten der Thermoplastenschmelze erforderlich ist. Dies kann beispielsweise zur Herstellung von Formkörpern auf dem Elektrosektor oder im Fahrzeugbereich notwendig sein.

### I. Herstellung von monofunktionellen Polystyrolen mit phenolischen Hydroxylendgruppen

### Beispiel I 1)

Zu einem Gemisch aus 6000 ml Toluol und 900 g (8,65 Mol) Styrol wurden unter N₂-Atmosphäre 36 ml n-Butyllithium (2,5 molare Lösung in Hexan) bei Raumtemperatur und unter Rühren gegeben. Nach einer Polymerisationszeit von 2 h wurde die orange-rote Polystyryllithium-Lösung mit 30 g (0,138 Mol) des Natrium-Phenolats von 4-Hydroxy-1,1-diphenylethylen in ca. 55 ml Tetrahydrofuran versetzt. Die Lösung wurde dunkelrot. Nach einer Reaktionszeit von 2 h wurden 30 ml Methanol/1-molare Phosphorsaure (1:1) (N₂-gesättigt) zugegeben. Das Polymere wurde durch Fallung in Methanol, Filtration und anschließende Trocknung gewonnen. Die Ausbeute betrug 870 g.
Mₙ (theoretisch) = 10 000 g/Mol
(berechnet aus Monomer- und Initiatorkonzentration)

### Beispiel I 2)

Zu einem Gemisch aus 500 ml Toluol und 1000 g (9,62 Mol) Styrol wurden unter N₂-Atmosphäre 60 ml n-Butyllithium (2,5 molare Lösung in Hexan) bei Raumtemperatur und unter Rühren gegeben. Nach einer Polymerisationszeit von 2 h wurde die orange-rote Polystyryllithium-Lösung mit 60 g (0,223 Mol) 4-Trimethylsilyloxy-1,1-diphenylethylen in 50 ml Toluol versetzt. Die Lösung wurde dunkelrot.

Nach einer Reaktionszeit von 1 h wurden 10 ml Methanol (N₂-gesättigt) zugegeben. Das Polymere wurde durch Fällung in Methanol isoliert.

Zur Spaltung des Silylethers wurde das Polymer in ca. 3000 ml Tetrahydrofuran/200 ml 1-molare methanolische Salzsäure gelöst und 1 h unter Rückfluß erhitzt. Zur Isolierung des Polymeren wurde in Methanol gefällt, neutral gewaschen und getrocknet. Die Ausbeute betrug 940 g.
Mₙ = 7300 g/Mol (GPC-Analyse mit Styrol-Eichung)

### Beispiel I 3)

Zu einem Gemisch aus 2000 ml Toluol und 500 g (4,81 Mol) Styrol wurden unter N₂-Atmosphäre 80 ml n-Butyllithium (2,5 molare Lösung in Hexan) bei Raumtemperatur und unter Rühren gegeben. Nach einer Polymerisationszeit von 2 h wurde die orange-rote Polystyryllithium-Lösung mit 50 g (0,23 Mol) des Natrium-Phenolats von 4-Hydroxy-1,1-diphenylethylen in ca. 100 ml Tetrahydrofuran versetzt. Die Lösung wurde dunkelrot. Nach einer Reaktionszeit von 2 h wurden 20 ml Methanol/1-molare Phosphorsäure (1:1) (N₂-gesättigt) zugegeben. Das Polymere wurde durch Fällung in Methanol, Filtration und anschließende Trocknung gewonnen. Die Ausbeute betrug 445 g.
Mₙ (theoretisch) = 2500 g/Mol
(berechnet aus Monomer- und Initiatorkonzentration)

### Beispiel I 4)

Zu einem Gemisch aus 6000 ml Toluol und 1000 g (9,62 Mol) Styrol wurden unter N₂-Atmosphäre 80 ml n-Butyllithium (2,5 molare Lösung in Hexan) bei Raumtemperatur und unter Rühren gegeben. Nach einer Polymerisationszeit von 2 h wurde die orange-rote Polystyryllithium-Lösung mit 50 g (0,23 Mol) des Natrium-Phenolats von 4-Hydroxy-1,1-diphenylethylen in ca. 100 ml Tetrahydrofuran versetzt. Die Lösung wurde dunkelrot, Nach einer Reaktionszeit von 2 h wurden 30 ml Methanol/1-molare Phosphorsäure (1:1) (N₂-gesättigt) zugegeben. Das Polymere wurde durch Fällung in Methanol, Filtration und anschließende Trocknung gewonnen. Die Ausbeute betrug 985 g.
Mₙ (theoretisch) = 5000 g/Mol
(berechnet aus Monomer- und Initiatorkonzentration)

### Herstellung eines monofunktionellen Poly-p-methylstyrols mit phenolischer Hydroxylendgruppe

### Beispiel I 5)

Zu einem Gemisch aus 2400 ml Toluol und 400 g (8,65 Mol) p-Methylstyrol wurden unter N₂-Atmosphäre 20 ml n-Butyllithium (2,5 molare Lösung in Hexan) bei Raumtemperatur und unter Rühren gegeben, Nach einer Polymerisationszeit von 2 h wurde die orange-rote Polystyryllithium-Lösung mit 20 g (0,092 Mol) des Natrium-Phenolats von 4-Hydroxy-1,1-diphenylethylen in ca. 35 ml Tetrahydrofuran versetzt. Die Lösung wurde dunkelrot, Nach einer Reaktionszeit von 2 h wurden 5 ml Methanol/1-molare Phosphorsäure (1:1) (N₂-gesättigt) zugegeben. Das Polymere wurde durch Fällung in Methanol, Filtration und anschließende Trocknung gewonnen. Die Ausbeute betrug 400 g.
Mₙ (theoretisch) = 8000 g/Mol
(berechnet aus Monomer- und Initiatorkonzentration)

### II. Herstellung der Dipolystyrolcarbonate

### Beispiel II 1)

250 g (0,05 Mol) des Produktes I 4) werden in 600 ml Methylenchlorid gelöst. Dann fügt man 50 g 40 %ige Natriumhydroxidlösung und 200 g Wasser hinzu und rührt kräftig in einer Inertgasatmosphäre. Innerhalb von 30 Min. werden bei 20 bis 25°C 19,8 g (0,20 Mol) Phosgen eingeleitet. Nach 5 Min, werden 0,2 ml N-Ethylpiperidin zugegeben und noch weitere 45 Min. gerührt. Die wäßrige Phase wird abgetrennt, die organische Phase mit 10 %iger Phosphorsäure angesäuert, mit Wasser neutral gewaschen, über Natriumsulfat getrocknet und von Lösungsmittel befreit,
Phenolisches OH durch Rücktitration nach der Titantetrachlorid-Methode <0,005 %.
- IR (cm⁻¹);: 3025 (arom. C-H-Valenzschwingung): 1942, 1870, 1800 und 1740 (arom. Kombinationsschwingung); 1776 (C=O-Valenzschwingungen); 1601 und 1583 (arom. C=C-Valenzschwingung).

### Beispiel II 2)

Wie in Beispiel II 1) wurde mit 500 g des Produktes I 1) zum entsprechenden Dipolystyrolcarbonat umgesetzt.

Phenolisches OH durch Rücktitration nach der Titantetrachlorid-Methode <0,009 %,

### Beispiel II 3)

Wie in Beispiel II 1) wurde mit 350 g des Produktes I 2) zum entsprechenden Dipolystyrolcarbonat umgesetzt.

### Beispiel II 4)

Wie in Beispiel II 1) wurde mit 125 g des Produktes I 3) zum entsprechenden Dipolystyrolcarbonat umgesetzt.

### Beispiel II 5)

Wie in Beispiel II 1) wurde mit 400 g des Produktes I 5) zum entsprechenden Dipolystyrolcarbonat umgesetzt.

### III. Herstellung der Polymermischungen in Lösung

Folgende Polymere IIIa, IIIb und IIIc, jeweils 95,0 g, wurden mit 5,0 g des Produkts II 3) in Lösung zu den Beispielen III 1), III 2) und III 3) gemischt.
IIIa) Homopolycarbonat des 2,2-Bis-(4-hydroxyphenyl)-propans mit einer relativen Lösungsviskosität von 1,28 (0,05 g/l gemessen in Methylenchlorid bei 25°C), ergibt III 1).
IIIb) Homopolycarbonat des 1,1-Bis-(4-hydroxyphenyl)-3,3,5-trimethylcyclohexans mit einer relativen Lösungsviskosität von 1.30 (0,05 g/l gemessen in Methylenchlorid bei 25°C), ergibt III2).
III c) Aromatisches Polyestercarbonat aus 80 Mol-% Polybutylenterephthalat und 20 Mol-% Bisphenol-A und Phosgen als Carbonatspender hergestellt, ergibt III 3).

### Beispiel III 4)

Wie in Beispiel III 1), aber mit 5,0 g des Produktes II 2).

### Beispiel III 5)

Wie in Beispiel III 1), aber mit 5,0 g des Produktes II 1).

### Beispiel III 6)

Wie in Beispiel III 1), aber mit 5,0 g des Produktes II 4).

### Beispiel III 7)

Wie in Beispiel III 1), aber mit 5,0 g des Produktes II 5).

### Beispiel III 8

Wie in Beispiel III 2), aber mit 95,0 g des Produktes III b) und 5,0 g des Produktes II 1).

### Beispiel III 9

Wie in Beispiel III 3), aber mit 95,0 g des Produktes III c) und 5,0 g des Produktes II 1).

Als Lösungsmittel diente Methylenchlorid, welches nach dem Vermischen der in den Beispielen genannten Substanzen durch Eindampfen entfernt wurde.

### IV. Compoundierungen der Dipolystyrolcarbonate mit Thermoplasten durch Schmelzextrusion

Folgende Polymere wurden mit dem Produkt II 1) durch Schmelzextrusion compoundiert:
a) Homopolycarbonat des 2,2-Bis-(4-hydroxyphenyl)-propans mit einer relativen Lösungsviskosität von 1,28 (0,05 g/l gemessen in Methylenchlorid bei 25°C),
b) Polyamid 6.
c) Polyamid 6.6.
d) Polybutylenterephthalat.
e) Polyethersulfon, mit einer relativen Lösungsviskosität von 1.368, gemessen an 0,5 Polyethersulfon in 100 ml CH₂Cl₂ bei 25°C.
f) Polyetheretherketon, hergestellt aus Difluorbenzophonon, Hydrochinon und Diphenylsulfon mit einer relativen Lösungsviskosität von 2.213 (gemessen bei einer Konzentration von 0,1 g/l in konzentrierter H₂SO₄).

### Beispiel IV 1)

1900 g des unter a) aufgeführten Polymeren und 100 g des Produktes II 1) werden bei 300°C durch Schmelzextrusion über eine Schnecke compoundiert.

### Beispiel IV 2)

1950 g des unter a) aufgeführten Polymeren und 50 g des Produktes II 1) werden bei 300°C durch Schmelzextrusion über eine Schnecke compoundiert.

### Beispiel IV 3)

Wie in Beispiel IV 2) wurde anstelle des Polymeren a) das Polymere b) bei 300°C mit 50 g des Produktes II 1) compoundiert.

### Beispiel IV 4)

Wie in Beispiel IV 2) wurde anstelle des Polymeren a) das Polymere c) bei 300°C mit 50 g des Produktes II 1) compoundiert.

### Beispiel IV 5)

Wie in Beispiel IV 2) wurde anstelle des Polymeren a) das Polymere d) bei 300°C mit 50 g des Produktes II 1) compoundiert.

### Beispiel IV 6)

Wie in Beispiel IV 2) wurde anstelle des Polymeren a) das Polymere e) bei 340°C mit 50 g des Produktes II 1) compoundiert.

### Beispiel IV 7)

Wie in Beispiel IV 2) wurde anstelle des Polymeren a) das Polymere f) bei 350°C mit 50 g des Produktes II 1) compoundiert.

### V. Schmelzviskosität der Lösungcompounds

| Produkt des Versuchs | Schmelzviskosität in Pa.s bei 300°C | |
|---|---|---|
| | 1000 | 1500 s⁻¹ |
| III a) | 467 | 371 (Vergleichsversuch) |
| III 1) | 90 | 71 |
| III 2) | 189 | 161 |
| III 3) | 246 | 220 |
| III 4) | 87 | 76 |
| III 5) | 100 | 82 |
| III 6) | 103 | 85 |
| III 7) | 85 | 72 |
| III 8) | 139 | 112 |

| Produkt des Versuchs | Schmelzviskosität in Pa.s bei 340°C | |
|---|---|---|
| | 1000 | 1500 s⁻¹ |
| III b) | 579 | - (Vergleichsversuch) |
| III 8 | 210 | 187 |

| Produkt des Versuchs | Schmelzviskosität 1000 in Pa.s bei 360°C | |
|---|---|---|
| | 1000 | 1500 s⁻¹ |
| III c) | 428 | 347 (Vergleichsversuch) |
| III 9 | 68 | 56 |

### VI. Schmelzviskosität der Extrudate

| Produkt des Versuchs | Schmelzviskosität in Pa.s bei 300°C | |
|---|---|---|
| | 1000 | 1500 s⁻¹ |
| IV a) | 467 | 371 (Vergleichsversuch) |
| IV 1) | 119 | 99 |
| IV 2) | 183 | 165 |
| IV b) | 34 | 32 (Vergleichsversuch) |
| IV 3) | 26 | 24 |
| IV c) | 59 | 54 (Vergleichsversuch) |
| IV 4) | 33 | 27 |
| IV d) | 44 | 43 (Vergleichsversuch) |
| IV 5) | 24 | 22 |

| Produkt des Versuchs | Schmelzviskosität in Pa.s bei 340°C | |
|---|---|---|
| | 1000 | 1500 s⁻¹ |
| IV e) | 832 | 611 (Vergleichsversuch) |
| IV 6) | 129 | 109 |

| Produkt des Versuchs | Schmelzviskosität in Pa.s bei 360°C | |
|---|---|---|
| | 1000 | 1500 s⁻¹ |
| IV f) | 347 | 289 (Vergleichsversuch) |
| IV 7) | 202 | 171 |

## Patentansprüche

1. Carbonate der Formel (I) 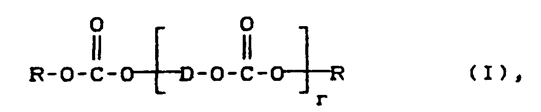 worin
R ein aromatisch angebundener Polystyrolrest ist und
-O-D-O- ein Diphenolatrest ist, worin -D- ein zweibindiger Rest mit 6 bis 30 C-Atomen ist, und
r Null ist und wobei aromatisch angebundene Polystyrolreste R solche sind, die von Monohydroxyphenylpolystyrolen ROH abgeleitet sind, und mittlere Zahlenmittelmolekulargewichte M̅n (M̅n ermittelt durch Gelpermeationschromatographie nach vorheriger Styrol-Eichung) von 1000 bis 50 000, haben.

2. Carbonate gemäß Anspruch 1, dadurch gekennzeichnet, daß R ein Rest der Formel (II) 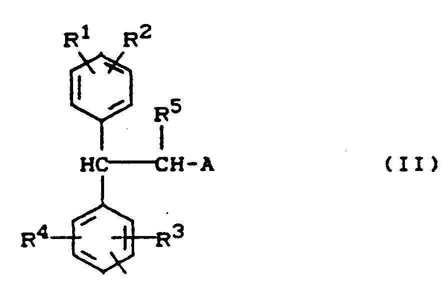 ist, worin
A ein Polymerisat von Styrol und/oder p-Methylstyrol,
R¹ und R² H, C₁-C₄-Alkyl oder CH₂-O-,
R³ H oder C₁-C₄-Alkyl, O-C₁-C₄-Alkyl,
R⁴ H, C₁-C₄-Alkyl und
R⁵ H oder C₁-C₄-Alkyl bedeuten.

3. Verfahren zur Herstellung der Carbonate der Formel (I) des Anspruchs 1, dadurch gekennzeichnet, daß man Monohydroxyphenylpolystyrole ROH nach dem Phasengrenzflachenverfahren mit Phosgen umsetzt, wobei ein Überschuß an Phosgen, bezogen auf die eingesetzte Menge an Monohydroxyphenylpolystryrol, einzusetzen ist.

4. Verwendung der Carbonate der Ansprüche 1 und 2 als Fliesshilfsmittel in Thermoplasten in Mengen von 0,01 Gew. % bis 30 Gew. %, bezogen jeweils auf Gesamtgewicht Thermoplast und Carbonat der Formel (I).

5. Mischungen enthaltend
(A) Thermoplasten in Mengen von 99,99 Gew.-% bis 70 Gew.-% und
(B) Carbonate der Ansprüche 1 und 2 in Mengen von 0,01 Gew.-% bis 30 Gew.-%, bezogen jeweils auf Gesamtgewicht aus (A) Thermoplast und (B) Carbonat.

6. Verfahren zur Herstellung der Mischungen des Anspruchs 5, dadurch gekennzeichnet, daß man die jeweiligen Komponenten (A) und (B) in der Schmelze in Mischern oder Knetern mischt und anschließend abkühlt und granuliert, oder daß man die Komponenten (A) und (B) unter Einwirkung hoher Scherkräfte extrudiert und anschließend granuliert oder daß man die Komponenten (A) und (B) in geeigneten Lösungsmitteln löst und die Lösungsgemische anschließend in bekannter Weise eindampft.

7. Mischungen des Anspruchs 5, enthaltend zusätzlich (C) mindestens ein Additiv, ausgewählt aus Stabilisatoren, Flammschutzmitteln, Entformungsmitteln, Antistatika, Pigmenten und UV-Absorbern.

8. Verfahren zur Herstellung der Mischung des Anspruchs 7, dadurch gekennzeichnet, daß man die Thermoplasten (A) in der Schmelze bei Temperaturen von 260°C bis 360°C zusammen mit den Carbonaten der Ansprüche 1 und 2 gemäß (B) und mindestens einem Additiv gemäß (C) vermischt und extrudiert.

## Claims

1. Carbonates corresponding to formula (I): 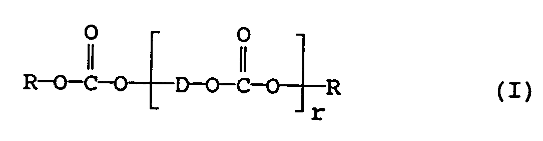 in which
R is an aromatically bound polystyrene moiety and
-O-D-O- is a diphenolate moiety in which -D- is a two-bond group containing 6 to 30 carbon atoms and
r is 0,
aromatically bound polystyrene moieties R being those which are derived from monohydroxyphenyl polystyrenes ROH and which have average number average molecular weights M̅n (M̅n determined by gel permeation chromatography after calibration with styrene) in the range from 1,000 to 50,000.

2. Carbonates as claimed in claim 1, characterized in that R is a moiety corresponding to formula (II): 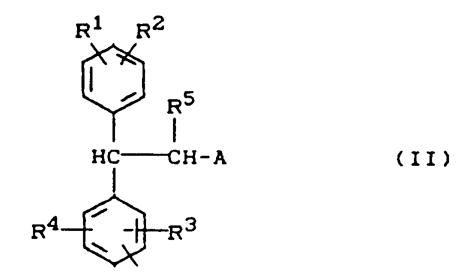 in which
A is a polymer of styrene and/or p-methyl styrene,
R¹ and R² represent H, C₁₋₄ alkyl or CH₂-O-,
R³ represents H or C₁₋₄ alkyl, O-C₁₋₄-alkyl,
R⁴ represents H, C₁₋₄ alkyl and
R⁵ represents H or C₁₋₄ alkyl.

3. A process for the production of the carbonates corresponding to formula (I) in claim 1, characterized in that monohydroxyphenyl polystyrenes ROH are reacted with phosgene by the interfacial process using an excess of phosgene, based on the quantity of monohydroxyphenyl polystyrene used.

4. The use of the carbonates claimed in claims 1 and 2 as flow aids in thermoplastics in quantities of 0.01% by weight to 30% by weight, based on the total weight of thermoplastic and carbonate corresponding to formula (I).

5. Mixtures containing
(A) thermoplastics in quantities of 99.9% by weight to 70% by weight and
(B) the carbonates claimed in claims 1 and 2 in quantities of 0.01% by weight to 30% by weight, based on the total weight of (A) thermoplastic and (B) carbonate.

6. A process for the production of the mixtures claimed in claim 5, characterized in that components (A) and (B) are mixed in the melt in mixers or kneaders and subsequently cooled and granulated or in that components (A) and (B) are extruded under the effect of intense shear forces and subsequently granulated or components (A) and (B) are dissolved in suitable solvents and the mixed solutions are subsequently concentrated by evaporation in known manner.

7. The mixtures claimed in claim 5 additionally containing (C) at least one additive selected from stabilizers, flameproofing agents, mould release agents, antistatic agents, pigments and UV absorbers.

8. A process for the production of the mixture claimed in claim 7, characterized in that the thermoplastics (A) are mixed and extruded in the melt together with the carbonates (B) claimed in claims 1 and 2 and at least one additive (C) at temperatures in the range from 260 to 360°C.

## Revendications

1. Carbonates de formule (I) : 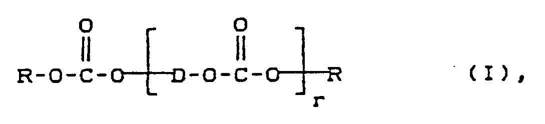 dans laquelle
R représente un reste polystyrène à fixation aromatique, et
-O-D-O- représente un reste diphénolate, dans lequel -D- représente un reste divalent comportant 6 à 30 atomes de carbone, et
r est nul, et
les restes polystyrène à fixation aromatique sont ceux qui dérivent de monohydroxyphénylpolystyrènes ROH, et qui ont des poids moléculaires moyens en nombre M̅ₙ (M̅ₙ étant déterminé par chromatographie de perméation d'un gel après étallonage préalable avec du styrène) de 1 000 à 50 000.

2. Carbonates selon la revendication 1, caractérisés en ce que R représetne un reste de formule (II) 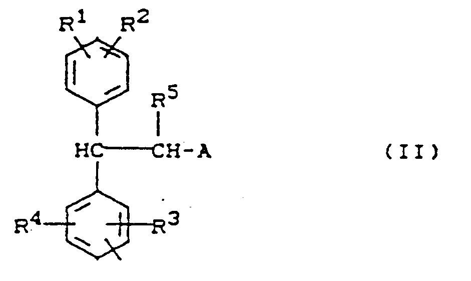 dans laquelle
A représente un polymère de styrène et/ou de p-méthylstyrène,
R¹ et R² représentent chacun H, un reste alkyle en C₁-C₄ ou CH₂-O,
R³ représente H ou un reste alkyle en C₁-C4, O-alkyle en C₁-C₄,
R⁴ représente H, un reste alkyle en C₁-C₄, et
R⁵ représente H ou un reste alkyle en C₁-C₄.

3. Procédé de préparation des carbonates de formule (I) selon la revendication 1, procédé caractérisé en ce qu'on fait réagir des monohydroxyphénylpolystyrènes ROH, selon le procédé opérant en surface limite des phases, avec du phosgène, procédé selon lequel on utilise un excès de phosgène par rapport à la quantité de monohydroxyphénylpolystyrène mis en oeuvre.

4. Utilisation des carbonates des revendications 1 et 2, comme adjuvant de fluidité dans des matières thermoplastiques, adjuvants que l'on utilise en des quantités de 0,01% en poids à 30% en poids, par rapport à chaque fois au poids total de la matière thermoplastique et du carbonate de formule (I).

5. Mélanges contenant :
(A) des matières thermoplastiques, présentes en des quantités de 99,99% en poids à 70% en poids, et
(B) des carbonates des revendications 1 et 2, présents en des quantités de 0,01% en poids à 30% en poids, par rapport à chaque fois au poids total de (A) la matière thermoplastique et de (B) le carbonate.

6. Procédé de préparation des mélanges de la revendication 5, caractérisé en ce qu'on mélange dans des mélangeurs ou dans des malaxeurs les constituants (A) et (B) en masse fondue, puis on refroidit et l'on granule, ou bien l'on extrude sous l'action de grandes forces de cisaillement les constituants (A) et (B) puis on granule ou bien on dissout les constituants (A) et (B) dans des solvants convenables et l'on concentre ensuite par évaporation, de façon connue, les mélanges des solvants.

7. Mélanges selon la revendication 5, contenant en outre (C) au moins un additif choisi parmi les stabilisants, des agents de protection contre les effets ou la propagation d'une flamme, des agents de démoulage, des anti(électricité)-statistique, des pigments et des agents d'absorption de l'ultraviolet.

8. Procédé de préparation du mélange selon la revendication 7, procédé caractérisé en ce qu'on mélange et extrude les matières thermoplastiques (A) en masse fondue à des températures de 260°C à 360°C avec les carbonates des revendications 1 et 2 selon (B) et au moins un additif selon (C).
